# EUROPÄISCHE PATENTSCHRIFT

(11) **EP 1 479 499 B1**
(45) Veröffentlichungstag und Bekanntmachung des Hinweises auf die Patenterteilung: **13.06.2007**
(21) Anmeldenummer: 04009414.6
(22) Anmeldetag: 21.04.2004
(51) Int. Cl.: B29C 44/12, B29C 44/14, B29C 44/16, B29C 45/14

(54) **Verfahren zum Herstellen eines Verbundbauteils und Zwischenprodukt**
Process to produce a composite member and intermediate product
Procédé de production d'un élément composite et produit intermédiaire

(30) Priorität: 21.05.2003 DE 10322994
(43) Veröffentlichungstag der Anmeldung: 24.11.2004
(73) Patentinhaber: ArvinMeritor GmbH, 63128 Dietzenbach (DE)
(72) Erfinder: Niebuhr, Frank, 38518 Gifhorn (DE); Ludwig, Matthias, 38159 Vechelde (DE); Hardel, Sven, 29386 Obernholz/Wettendorf (DE); Bebenroth-Struss, Joachim, 38550 Isenbüttel (DE); Langhoff, Hans-Joachim, 38518 Gifhorn (DE); Niesner, Tobias, 38518 Gifhorn (DE); Batke, Harald, 38539 Gerstenbüttel (DE); Beneke, Sören, 38518 Gifhorn (DE); Lutz, Marcus, 38518 Gifhorn (DE)
(74) Vertreter: Kitzhofer, Thomas

(56) Entgegenhaltungen:
- DE-A1- 3 127 832
- US-B1- 6 499 797
- US-B1- 6 551 432

## Beschreibung

Die Erfindung betrifft ein Verfahren zum Herstellen eines Verbundbauteils, insbesondere eines im eingebauten Zustand sichtbaren Fahrzeugteils wie z.B. eines Karosserieanbauteils.

Karosserieanbauteile sind solche Teile, die an der Fahrzeugkarosserie angebracht werden, die die Außenhaut des Fahrzeugs in fertig montiertem Zustand definieren und von außen sichtbar sind. Solche Karosserieanbauteile sollen ein geringes Gewicht haben, gute Festigkeitseigenschaften besitzen, optisch an angrenzende, lackierte Teile angepaßt sein, eine hervorragende Oberflächenqualität (z. B. Class-A-Oberfläche) und neben guten Wärmeeigenschaften auch gute Schallisolationseigenschaften haben. Karosserieanbauteile können insbesondere Dachmodule sein, worunter auch Dachmodule mit Schiebedacheinheit oder Lamellendächer fallen. Andere Anwendungsmöglichkeiten sind Klappen (Türen, Deckel), Kotflügel oder Stoßfänger. Es ist bereits bekannt, ein Dachmodul als Verbundbauteil herzustellen, mit einer außenseitigen, gefärbten, hier vorzugsweise durchgefärbten Kunststoffolie, die auch als Folienteil bezeichnet werden kann. Innenseitig wird diese Kunststoffolie mit einem faserverstärkten Kunststoff hinterschäumt oder hinterspritzt, insbesondere mit einem glasfaserverstärkten PU-Material.

Darüber hinaus gibt es auch im Fahrzeuginnenraum Bauteile, die in eingebautem Zustand sichtbar sind, die ein Verbundteil darstellen und die eine hohe Oberflächenqualität bieten müssen, insbesondere z. B. der Wagenfarbe angepaßte Zierapplikationen.

Die US 6,551,432 B1 beschreibt ein Verfahren zur Übertragung trockener Farbschichten von einer Trägerschicht auf eine Unterstützungsschicht, wobei die Farbschichten und die Unterstützungsschicht nachfolgend thermoplastisch umgeformt und hinterspritzt werden. In einem Ausführungsbeispiel wird dabei auf der Sichtfläche ein wasserlöslicher Überzug zum Schutz der Farbschichten aufgebracht. Mit diesem Verfahren soll insbesondere von außen sichtbaren Kunststoffverkleidungsteilen einer Fahrzeugkarosserie eine zufriedenstellende Färbung und Beschaffenheit der Sichtfläche verliehen werden.

Bei einem bisher angewandten Verfahren zum Herstellen eines Verbundbauteils wird die noch nicht hinterschäumte Folie (im folgenden Folienteil genannt) mit einer außenseitigen Schutzfolie angeliefert, damit die später sichtbare Außenseite beim Handling nicht beschädigt wird. Das später fertige Bauteil wird ebenfalls mit der Schutzfolie zum Automobilhersteller geliefert, erst dieser entfernt die Schutzfolie unmittelbar vor der Montage des Verbundbauteils, um Beschädigungen oder Verunreinigungen zu vermeiden.

Aufgabe der Erfindung ist es, ein Verfahren zum Herstellen eines Verbundbauteils zu entwickeln, welches bezüglich seiner Außenhaut optisch extrem hohen Ansprüchen genügt und das dennoch relativ einfach durchzuführen ist.

Das erfindungsgemäße Verfahren sieht die Schritte gemäß Anspruch 1 vor.

Beim erfindungsgemäßen Verfahren bleibt die Schutzfolie über das gesamte Verfahren am Folienteil, sogar in der Schäum- oder Spritzform, wo enorm hohe Drücke herrschen. Da das Folienteil vorzugsweise in einer Materialstärke zwischen 0,5 bis 1 mm eingesetzt wird, kann es durch diese hohen Drücke sehr leicht zu Verletzungen der Oberfläche der Außenhaut des Folienteils und damit der Außenhaut des späteren Verbundbauteils kommen. Das Problem der Schutzfolie besteht jedoch darin, daß sie frei von feinsten Verunreinigungen (sog. Stippen) sein sollte. Diese Verunreinigungen sind Erhöhungen oder Verdickungen in der Schutzfolie. Diese führen in der Schäum- oder Spritzform aber dazu, daß sie sich in die Außenhaut des Folienteils eindrücken und kleine Vertiefungen erzeugen, die die Oberflächenqualität mindern. Je nach Anforderung des Automobilherstellers führen diese Vertiefungen zu einem hohen Ausschußgrad der bereits fast fertigen Verbundbauteile, die nicht nachgebessert oder repariert werden können. Zwar werden Schutzfolien stetig weiterentwickelt, es ist jedoch bislang nicht möglich, völlig verunreinigungs- oder stippenfreie Schutzfolien zu erhalten. Um obigen Nachteil zu vermeiden sieht die Erfindung vor, daß die Schutzfolie vorderseitig zur Erzielung einer glatten Außenoberfläche unter Materialabtrag bearbeitet, insbesondere außenseitig geschliffen wird, bevor das Folienteil hinterschäumt oder hinterspritzt wird. Das bedeutet, die Einheit aus Folienteil und Schutzfolie, die in die Schäum- oder Spritzform eingelegt wird, ist aufgrund der Bearbeitung glatter und mit weniger oder überhaupt keinen Unebenheiten auf der Außenseite der Schutzfolie versehen, verglichen mit der unbearbeiteten Schutzfolie. Damit drücken sich die Unebenheiten auch nicht beim späteren Schäumen oder Spritzen im Folienteil ab. Das Verbundbauteil bildet eine Oberflächenqualität, die sogar noch besser ist als bei lackierten Blechteilen.

Das Folienteil wird vorzugsweise nach dem Schritt a) und vor dem Schritt b) bleibend umgeformt, erneut ohne die Schutzfolie abzuziehen.

Das Folienteil ist insbesondere aus thermoplastischem Material und wird unter Erwärmen plastisch umgeformt, beispielsweise in einem Tiefziehprozeß.

Vorzugsweise wird das Folienteil wannenförmig umgeformt, und rückseitig wird in die "Wanne" beim Hinterschäumen oder Hinterspritzen der flüssige Kunststoff eingebracht.

Zur Erhöhung der Stabilität des Verbundbauteils ist der Kunststoff, mit dem hinterschäumt oder hinterspritzt wird, mit Fasern, insbesondere Glasfasern, versetzt.

Das erfindungsgemäße Verfahren ist insbesondere, wie bereits erläutert, zur Herstellung eines Karosserieanbauteils, in anderen Worten eines Kfz-Struktur- oder Beplankungsbauteils vorgesehen.

Die Erfindung betrifft darüber hinaus auch ein Zwischenprodukt gemäß Anspruch 10.

Weitere Merkmale und Vorteile der Erfindung ergeben sich aus der nachfolgenden Beschreibung und aus den nachfolgenden Zeichnungen, auf die Bezug genommen wird. In den Zeichnungen zeigen:
- Figur 1 eine schematische Perspektivansicht eines Fahrzeugdachs mit einem erfindungsgemäß hergestellten Karosserieanbauteil,
- Figur 2 eine vergrößerte Schnittansicht durch ein mit der Schutzfolie versehenes Folienteil im Ausschnitt,
- Figur 3 eine Querschnittsansicht durch das tiefgezogene Folienteil samt Schutzfolie,
- Figur 4 das erfindungsgemäße Zwischenprodukt in Querschnittsansicht, mit der außenseitig bearbeiteten Schutzfolie,
- Figur 5 eine schematische Schnittansicht durch ein Schäum- oder Spritzwerkzeug mit eingelegtem Folienteil nach dem Schäum- oder Spritzvorgang und
- Figur 6 eine Schnittansicht durch das fertige Verbundbauteil.

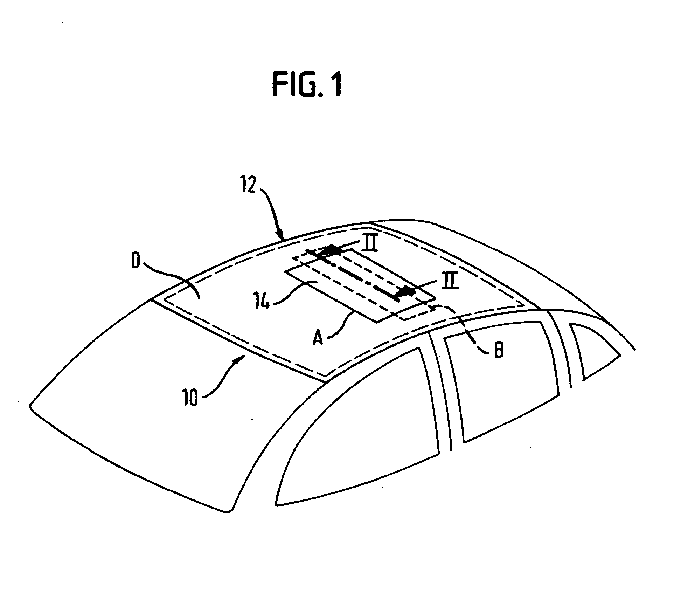

In Figur 1 ist ein Fahrzeugdach 10 dargestellt, dessen Außenhaut wenigstens abschnittsweise durch ein Karosserieanbauteil in Form eines Verbundbauteils 12 definiert ist. Das Karosserieanbauteil kann z. B. das gesamte Dachmodul D oder der Deckel A oder die Lamelle B zum Schließen einer Dachöffnung sein. Andere Einsatzzwecke für das Karosserieanbauteil sind Türen, Klappen oder Stoßfänger eines Fahrzeugs oder zumindest Abschnitte von dessen Außenhaut sowie Teile der Innenverkleidung.

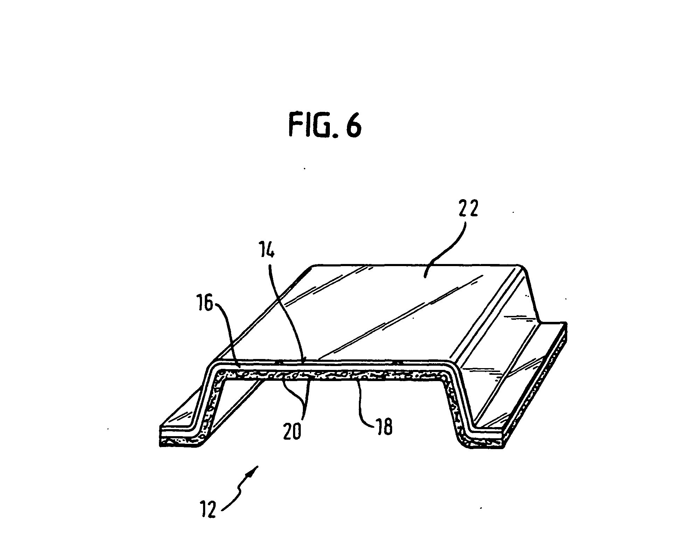

Das Verbundbauteil 12 (Figur 6) besteht aus mehreren miteinander verbundenen Kunststoffschichten. Die im eingebauten Zustand sichtbare Außenhaut definiert die Außenseite 14 des Verbundbauteils 12. Das Folienteil 16 besteht aus einer maximal 1,5 mm dicken Kunststoffolie, insbesondere einer zweischichtigen Koextrusionsfolie. Die äußere Schicht ist eine harte Deckschicht, vorzugsweise aus Polymethylmethacrylat (PMMA), welche innenseitig mit einer durchgefärbten Trägerschicht, vorzugsweise aus einer Mischung aus Polycarbonat (PC) und Acrylnitril-Styrol-Acrylsäureester-Copolymerisat (ASA), verbunden ist. Die Deckschicht ist nur etwa 0,4 mm dick und kann durchsichtig oder ebenfalls durchgefärbt sein. Die beiden Schichten sind nicht separat dargestellt. Durch die Durchfärbung der Schichten kann eine außenseitige Lackierung entfallen. Rückseitig ist das Folienteil 16 hinterschäumt oder hinterspritzt, die entsprechend hergestellte Schicht ist mit 18 bezeichnet. Sie besteht aus PU-Material, in das Glasfasern 20 ungeordnet beim Schäum- oder Spritzvorgang eingebracht werden. Dieses Verfahren wird auch LFI(Long Fibre Injection)-Verfahren genannt.

Zwischen dem Folienteil 16 und der Schicht 18 kann ggf. auch eine zusätzliche Trennschicht oder dergleichen, z. B. aus offenzelligem Schaum, vorgesehen sein, die verhindert, daß sich Glasfasern 20 auf der Außenseite 14 des Folienteils 16 abzeichnen.

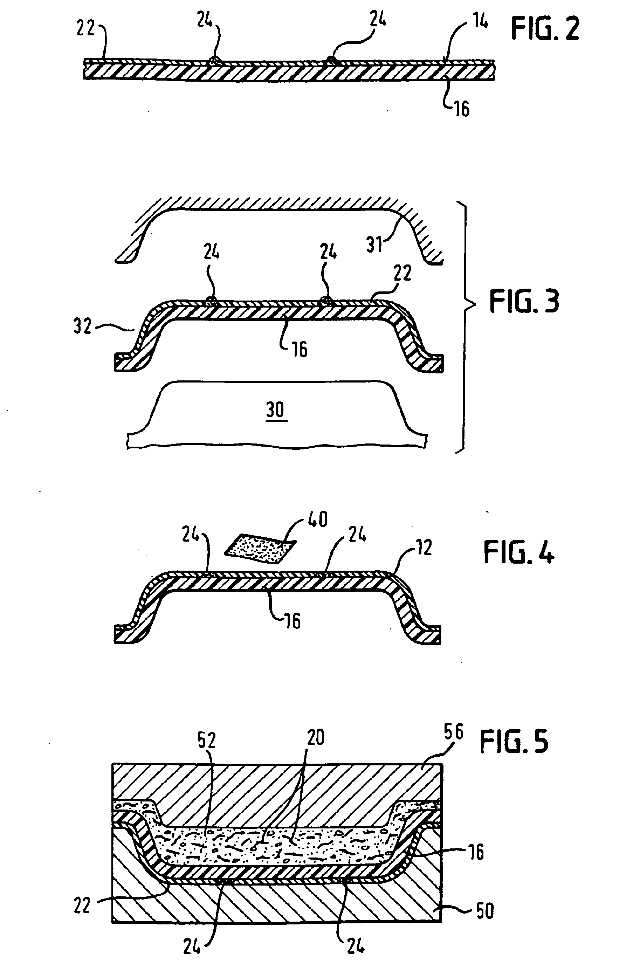

Im folgenden wird anhand der Figuren 2 bis 6 das Verfahren zum Herstellen des Verbundbauteils 12 beschrieben.

Zuerst wird das Folienteil 16 mit einer ihre Außenseite 14 vollständig abdeckenden dünnen Schutzfolie 22 aus Kunststoff bereitgestellt (Figur 2). Diese Einheit wird beispielsweise in großen Rollen oder dünnen Platten komplett angeliefert. Die Schutzfolie 22 hat fast immer mehrere Unebenheiten 24 bildende Verunreinigungen, die Erhöhungen darstellen und auch als sog. Stippen bezeichnet werden. Die Schutzfolie 22 wird im übrigen beim Extrudieren des Folienteils 16 aufgebracht.

Im nächsten Schritt (Figur 3) wird das Folienteil 16 tiefgezogen, indem es randseitig befestigt wird und eine Art Stempel 30 unter gleichzeitiger Wärmezufuhr das Folienteil 16 in eine Matritze 31 drückend plastisch bleibend deformiert. Das Folienteil 16 hat anschließend ein wannenförmiges Aussehen. Der Rand 32 läuft dabei vorzugsweise geschlossen um.

Im nächsten Verfahrensschritt (Figur 4) wird die Schutzfolie 22 außenseitig mit einem feinen Schleifpapier 40, z. B. per Hand, bearbeitet, so daß die Unebenheiten 24 nicht mehr vorstehen. Die Unebenheiten 24 werden egalisiert.

Das so bearbeitete Zwischenprodukt wird anschließend in das Unterteil 50 einer Schäumform (Figur 5) gelegt, so daß die Schutzfolie 22 auf der Innenfläche des Unterteils 50 aufliegt. Rückseitig wird auf das Folienteil 16 als Schäummaterial flüssiges PU-Material 52 aufgetragen, in das Glasfasern 20 eingeschossen werden. Anschließend fährt das Oberteil 56 nach unten, so daß ein mit PU-Material 52 gefüllter Hohlraum gebildet wird. Die Form ist vorzugsweise erwärmt, und das PU-Material schäumt aus, es verbindet sich dabei mit dem Folienteil 16.

Alternativ wird Kunststoffmaterial, das ebenfalls das Bezugszeichen 52 trägt, in den Zwischenraum zwischen Folienteil 16 und Oberteil 56 gespritzt, so daß das Folienteil 16 hinterspritzt wird.

Anschließend wird das entstandene Verbundbauteil 12 dem Werkzeug wieder entnommen und samt der Schutzfolie 22 an den Automobilhersteller geliefert.

Vor dem Einbau des Verbundbauteils ins Fahrzeug wird die Schutzfolie 22 erst abgezogen.

Das hergestellte Verbundbauteil weist keine Oberflächendefekte auf und muß nicht nachlackiert werden.

Die Außenseite der Schutzfolie 22 kann komplett oder nur an den mit den Unebenheiten 24 versehenen Stellen nachgearbeitet, insbesondere geschliffen werden. Dieses Nachbearbeiten könnte auch mit einem Werkzeug, beispielsweise einem Roboter-geführten Werkzeug erfolgen.

Alternativ kann die Schutzfolie vor dem Umformen in Fig. 3 bearbeitet werden, so daß der Schritt gemäß Fig. 4 entfällt.

## Patentansprüche

1. Verfahren zum Herstellen eines Verbundbauteils (12), insbesondere eines im eingebauten Zustand sichtbaren Fahrzeugteils, **gekennzeichnet durch** folgende Schritte, die in der angegebenen Reihenfolge durchgeführt werden:
a) es wird eine die sichtbare Außenhaut des Verbundbauteils (12) bildendes Folienteil (16) bereitgestellt, das vorderseitig mit einer abziehbaren Schutzfolie (22) versehen ist,
b) die Schutzfolie (22) wird vorderseitig zur Egalisierung von Unebenheiten (24) bearbeitet,
c) das Folienteil (16) samt der Schutzfolie (22) wird in eine Schäum- oder Spritzform gelegt und
d) das Folienteil (16) wird rückseitig hinterspritzt oder hinterschäumt.

2. Verfahren nach Anspruch 1, **dadurch gekennzeichnet, daß** das Folienteil (16) nach Schritt b) umgeformt wird.

3. Verfahren nach Anspruch 1, **dadurch gekennzeichnet, daß** das Folienteil (16) nach Schritt a) und vor Schritt b) umgeformt wird.

4. Verfahren nach einem der vorhergehenden Ansprüche, **dadurch gekennzeichnet, daß** das Folienteil (16) aus einem thermoplastischen Material ist, insbesondere eine zweischichtige Koextrusionsfolie ist.

5. Verfahren nach den Ansprüchen 2 oder 3 und zusätzlich 4, **dadurch gekennzeichnet, daß** das mit der Schutzfolie (22) versehene Folienteil (16) unter Erwärmen plastisch umgeformt wird.

6. Verfahren nach einem der Ansprüche 2 oder 3 und zusätzlich 5, **dadurch gekennzeichnet, daß** das Folienteil (16) wannenförmig umgeformt wird.

7. Verfahren nach einem der vorhergehenden Ansprüche, **dadurch gekennzeichnet, daß** beim Hinterschäumen oder Hinterspritzen Glasfasern (20) in das flüssige Schäummaterial (52) eingebracht werden.

8. Verfahren nach einem der vorhergehenden Ansprüche, **dadurch gekennzeichnet, daß** die Schutzfolie (22) im Schritt b) außenseitig geschliffen wird.

9. Verfahren nach einem der vorhergehenden Ansprüche, **dadurch gekennzeichnet, daß** das Verbundbauteil (12) ein Fahrzeug-Karosserieanbauteil ist.

10. Zwischenprodukt zur Herstellung eines Verbundbauteils, insbesondere eines Fahrzeugteils, mit einem umgeformten Folienteil (16) und einer auf die Außenseite (14) des Folienteils (16) aufgebrachten, die Außenseite (14) bedeckenden Schutzfolie (22), **gekennzeichnet dadurch, dass** die Schutzfolie (22) wiederum außenseitig so überschliffen ist, daß Unebenheiten (24) in der Schutzfolie (22) egalisiert sind.

## Claims

1. A method of manufacturing a composite part (12), in particular a vehicle part that is visible in the installed state, **characterized by** the following steps, which are carried out in the order as indicated:
a) a foil part (16) is provided that constitutes the visible outer skin of the composite part (12), the foil part being provided on its front side with a removable protective foil (22);
b) the protective foil (22) is worked on its front side to equalize any uneven spots (24);
c) the foil part (16) together with the protective foil (22) is placed in a foaming or injection mold; and
d) the foil part (16) is back-molded or back-foamed on its rear side.

2. The method as recited in claim 1, **characterized in that** the foil part (16) is reshaped after step b).

3. The method as recited in claim 1, **characterized in that** the foil part (16) is reshaped after step a) and before step b).

4. The method as recited in any of the preceding claims, **characterized in that** the foil part (16) is made of a thermoplastic material, in particular is a two-layer coextrusion foil.

5. The method as recited in claims 2 or 3 and additionally 4, **characterized in that** the foil part (16) provided with the protective foil (22) is plastically reshaped under the influence of heat.

6. The method as recited in any of claims 2 or 3 and additionally 5, **characterized in that** the foil part (16) is reshaped to assume a trough shape.

7. The method as recited in any of the preceding claims, **characterized in that**, during the back-foaming or back-molding, glass fibers (20) are incorporated into the liquid foaming material (52).

8. The method as recited in any of the preceding claims, **characterized in that** the protective foil (22) is polished on its outer side in step b).

9. The method as recited in any of the preceding claims, **characterized in that** the composite part (12) is a vehicle body panel part.

10. An intermediate product for manufacturing a composite part, in particular a vehicle part, comprising a reshaped foil part (16) and a protective foil (22) applied on the outer side (14) of the foil part (16) and covering the outer side (14), **characterized in that** the protective foil (22) in turn is finished by polishing on its outer side such that any uneven spots (24) in the protective foil (22) are equalized.

## Revendications

1. Procédé de fabrication d'un élément composite (12), en particulier d'une pièce de véhicule visible à l'état monté, **caractérisé par** les étapes suivantes qui sont exécutées selon l'ordre suivant:
a) il est prévu une pièce en feuille (16) qui forme la peau extérieure visible de l'élément composite (12) et qui est pourvue, sur con côté avant, d'une feuille protectrice (22) pouvant être retirée,
b) la feuille protectrice (22) est travaillée sur son côté avant afin d'égaliser des aspérités (24),
c) la pièce en feuille (16) ainsi que la feuille protectrice (22) sont placées dans un moule de moussage ou dans un moule à injection, et
d) le côté postérieur de la pièce en feuille (16) est surmoulé par injection ou par moussage.

2. Procédé selon la revendication 1, **caractérisé en ce que** la pièce en feuille (16) est reformée après l'étape b).

3. Procédé selon la revendication 1, **caractérisé en ce que** la pièce en feuille (16) est reformée après l'étape a) et avant l'étape b).

4. Procédé selon l'une des revendications précédentes, **caractérisé en ce que** la pièce en feuille (16) est en matière thermoplastique et est en particulier une feuille de coextrusion à deux couches.

5. Procédé selon les revendications 2 ou 3 et additionnellement 4, **caractérisé en ce que** la pièce en feuille (16) pourvue de la feuille protectrice (22) est reformée plastiquement par chauffage.

6. Procédé selon l'une des revendications 2 ou 3 et additionnellement 5, **caractérisé en ce que** le pièce en feuille (16) est reformée en forme de cuvette.

7. Procédé selon l'une des revendications précédentes, **caractérisé en ce** lors du surmoulage par moussage ou par injection, des fibres de verre (20) sont incorporées dans la matière de moussage (52) liquide.

8. Procédé selon l'une des revendications précédentes, **caractérisé en ce** le côté extérieur de la feuille protectrice (22) est poli lors de l'étape b).

9. Procédé selon l'une des revendications précédentes, **caractérisé en ce que** l'élément composite (12) est une pièce rapportée de carrosserie de véhicule.

10. Produit intermédiaire pour la fabrication d'un élément composite, en particulier d'une pièce de véhicule, comprenant une pièce en feuille (16) reformée et une feuille protectrice (22) appliquée sur le côté extérieur (14) de la pièce en feuille (16) et recouvrant le côté extérieur (14), **caractérisé en ce que** le côté extérieur de la feuille protectrice (22) est à son tour façonné par polissage de manière à égaliser des aspérités (24) dans la feuille protectrice (22).
